# EUROPEAN PATENT SPECIFICATION

(11) **EP 2 811 542 B1**
(45) Date of publication and mention of the grant of the patent: **25.07.2018**
(21) Application number: 13182875.8
(22) Date of filing: 03.09.2013
(51) Int. Cl.: H01M 2/10, H01M 10/42

(54) **Battery pack**
Batteriepack
Bloc-batteries

(30) Priority: 04.06.2013 US 201361830873 P
(43) Date of publication of application: 10.12.2014
(73) Proprietor: Samsung SDI Co., Ltd., Yongin-si, Gyeonggi-do (KR)
(72) Inventor: Lee, Won-Il, Gyeonggi-do (KR)
(74) Representative: Mounteney, Simon James

(56) References cited:
- EP-A1- 2 017 909
- EP-A1- 2 056 374
- EP-A1- 2 408 042
- JP-A- 2011 129 668
- US-A1- 2006 091 891
- US-A1- 2011 305 930

## Description

### [Technical Field]

One or more embodiments of the present invention relate to a battery pack.

### [Related Art]

Owing to development of wireless internet and communication technology, portable computers such as tablet PCs or notebook computers that may be driven by using a battery without a power supply device have been distributed rapidly. In general, portable computers are small and convenient to move, and thus, widely used as for business or personal purposes.

In addition, in order to use portable computers freely in any kind of space without regard to an external power supply device, the portable computers may include a built-in battery pack. Such a battery pack is a module by electrically connecting a plurality of battery cells, each of which may be chargeable and dischargeable, to configure a large capacity and high output power supply device. In addition, a battery pack may include a support structure for supporting the plurality of battery cells and binding the plurality of battery cells as a battery pack. Document EP2408042 discloses a battery pack comprising a battery cell and a frame including a frame main body having an opening for accommodating the battery cell.

### [Disclosure of the Invention]

### [Technical Goal of the Invention]

The present invention is defined by the features of claim 1 and relates to a battery pack. One or more embodiments of the present invention include a battery pack capable of reducing the number of components and the number of processes by improving a support structure of battery cells.

One or more embodiments of the present invention also include a battery pack suitable for a thin type device by improving a support structure of battery cells.

### [Means for Achieving Technical Goal]

The present invention provides a battery pack as defined by any of claims 1 to 13. According to one or more embodiments of the present invention, a battery pack includes: at least one battery cell, preferably battery cells; and a frame including a frame main body having assembling openings for accommodating the battery cells, and supporting portions protruding from the frame main body toward the assembling openings to support edges of the at least one battery cell, preferably battery cells, wherein supporting surfaces of the supporting portions are formed as curved surfaces.

The frame may preferably comprise a non-curved surface adjacent to the supporting protrusion, optionally wherein the non-curved surface is at the top of the assembly opening and the supporting protrusion is at the bottom of the assembly opening
The supporting portions may preferably be formed at side portions of the assembling openings.

The supporting portions may preferably extend in parallel with each other along opposite side portions of the battery cells.

The supporting portions may preferably be formed to surround corners of the opposite side portions of the battery cells.

The supporting portions may preferably protrude from the frame main body toward the assembling openings along soft curved surfaces.

The battery cell may preferably have a hexahedron shape including: a first side portion through which an electrode tap is withdrawn; a second side portion formed opposite to the first side portion; a third side portion and a fourth side portion extending in parallel with each other between the first and second side portions.

The supporting portions may preferably extend in parallel with each other along opposite side portions of the assembling opening, which face the third and fourth side portions.

The supporting portions may preferably extend along three side portions of the assembling opening, which face the second, third, and fourth side portions.

The supporting portion may preferably surround a corner of at least one of the second through fourth side portions of the battery cell.

The frame may preferably further include a circuit mounting portion on which a protective circuit module that controls charging and discharging operations of the battery cells is mounted.

The circuit mounting portion is formed at a center position of the frame, and the assembling openings may preferably be formed at opposite sides of the circuit mounting portion.

Each of the battery cells may preferably include a first side portion through which an electrode tap is withdrawn, and the battery pack may preferably further include lead plates extending along first side portions of the battery cells to electrically connect neighboring battery cells to each other.

Ends of the lead plates may preferably be connected to the protective circuit module.

The lead plates may preferably include a first lead plate for electrically connecting the protective circuit module and the battery cells disposed at a side of the protective circuit module; and a second lead plate for electrically connecting the protective circuit module and the battery cells disposed at the other side of the protective circuit module.

A connection member for connecting to an external device may preferably be connected to the protective circuit module.

The connection member may preferably be a flexible printed circuit board.

The battery pack may preferably further include an insulating plate disposed to cover a surface of the frame.

The supporting portions may preferably be formed at the other surface of the frame.

The battery cell includes an electrode assembly, and a pouch for sealing the electrode assembly, wherein the pouch includes side wings that can be formed by folding fusion bonding portion of the pouch.

The battery cell may preferably include a first side portion through which the electrode tap is withdrawn, a second side portion formed opposite to the first side portion, and a third side portion and a fourth side portion extending in parallel with each other between the first and second side portions, wherein the side wings may preferably extend along the third and fourth side portions.

The side wings overlap the supporting portions.

The side wings are curved along with the rounded shapes of the supporting portions.

### [Effect of the Invention]

According to the present invention, the battery cells are supported by the supporting portions integrally formed with the frame main body, and thus, an additional tape member for fixing the battery cells may not be necessary, and a taping process having a low workability may be omitted. Also, by forming the supporting portions protruding from the frame main body as rounded curves, a battery pack having a thin thickness may be manufactured.

### [Brief Description of the Drawings]

FIG. 1 is an exploded perspective view of a battery pack according to an embodiment of the present invention;
FIG. 2 is a perspective view of a battery cell included in the battery pack of FIG. 1;
FIG. 3 is a cross-sectional view of the battery cell taken along a line III-III of FIG. 2;
FIG. 4 is an exploded perspective view of the battery pack of FIG. 1 seen from an opposite side of a frame shown in FIG. 1;
FIGS. 5A and 5B are cross-sectional views of the battery pack taken along a line V-V of FIG. 1 for illustrating an assembling process between a frame and a battery cell;
FIG. 6 is a cross-sectional view of a battery pack according to a comparative example; and
FIG. 7 is a cross-sectional view of a battery pack according to another comparative example.

### [Description of Embodiment]

Reference will now be made in detail to embodiments, examples of which are illustrated in the accompanying drawings, wherein like reference numerals refer to the like elements throughout.

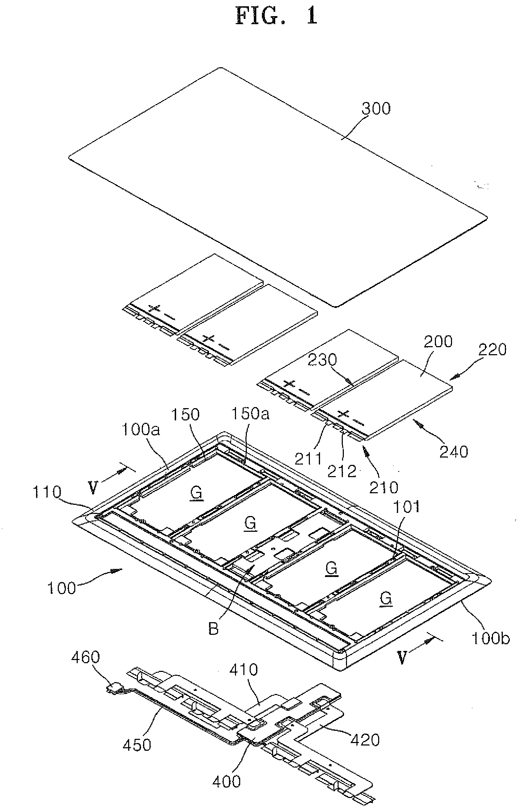

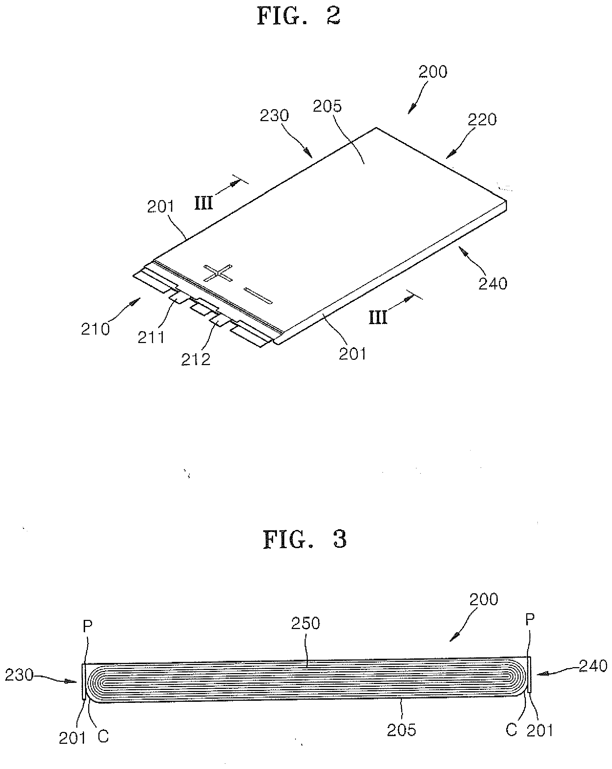

FIG. 1 is an exploded perspective view of a battery pack according to an embodiment of the present invention, FIG. 2 is a perspective view of a battery cell included in the battery pack 200 of FIG. 1, and FIG. 3 is a cross-sectional view of the battery cell 200 taken along a line III-III of FIG. 2.

Referring to FIG. 1, the battery pack includes a plurality of battery cells 200, a frame 100 for supporting the battery cells 200, and a protective circuit module 400 supported on the frame 100 with the battery cell 200 for controlling charging/discharging operations of the battery cell 200.

Referring to FIGS. 2 and 3, the battery cell 200 includes an electrode assembly 250, and a pouch 205 for sealing the electrode assembly 250.

The electrode assembly 250 may preferably be formed by, for example, stacking a positive plate on which a positive active material is applied, a negative plate on which a negative active plate is applied, and a separator disposed between the positive plate and the negative plate, and winding the stacked substances as a jelly roll type. Otherwise, the electrode assembly may preferably be manufactured by stacking the positive plate, the separator, and the negative plate sequentially for a plurality of times.

A first electrode tap 211 and a second electrode tap 212 of different polarities may preferably be connected to the electrode assembly 250. The first and second electrode taps 211 and 212 are drawn to outside via a first side portion 210 of the battery cell 200, and may preferably be electrically connected to the protective circuit module 400 as will be described later.

The pouch 205 may preferably include a pair of side wings 201 formed by fusion bonding operations. The pair of side wings 201 may preferably be disposed on side portions 230 and 240 of the battery cell 200. For example, the pair of side wings 201 may preferably be bent and disposed on the side portions 230 and 240 of the battery cell 200.

In an embodiment of the present invention, the pouch is sealed using sealing portions that extend outwards from the pouch. In an embodiment of the present invention these sealing portions form a pair of side wings. In an embodiment of the present invention these are formed by heat treat treating the sealing portions. In a further embodiment the formation step forms side wings that may be comparably curved with the curved surface of the supporting portions.

The battery cell 200 may preferably be formed as a hexahedron including two main surfaces, one of which faces the frame 100 and the other of which is opposite to the above surface, and side portions 210, 220, 230, and 240 between the main surfaces.

For example, the side portions 210, 220, 230, and 240 may preferably include side surfaces and corners of the battery cell 200. In particular, the side portions 210, 220, 230, and 240 of the battery cell 200 may preferably include a first side portion 210 through which the electrode taps 211 and 212 are withdrawn, a second side portion 220 formed opposite to the first side portion 210, and third and fourth side portions 230 and 240 extending in parallel with each other between the first and second side portions 210 and 220.

For example, the third and fourth side portions 230 and 240 of the battery cell 200 may preferably include rounded corners C. That is, the third and fourth side portions 230 and 240 of the battery cell 200 may preferably be formed as curves along corners of the electrode assembly 250, which are wound as oval shapes. In more detail, the rounded corners C may preferably be corners that are farther from bending points P in the third and fourth side portions 230 and 240. For example, corners closer to the bending points P may preferably be angulated for forming the side wings 201.

As shown in FIG. 1, the frame 100 configures an appearance of the entire battery pack, and supports the battery cell 200 and the protective circuit module 400.

The frame 100 may preferably support a plurality of battery cells 200. According to the embodiment shown in FIG. 1, the plurality of battery cells 200 may preferably be arranged in parallel with each other, and the electrode taps 211 and 212 withdrawn from each of the battery cells 200 may preferably extend in parallel with each other and may preferably be collected at a side of the frame 100. Otherwise, according to another embodiment of the present invention, the plurality of battery cells 200 may preferably be arranged to face each other so as to form a plurality of pairs of two battery cells 200, and to withdrawn the electrode taps 211 and 212 from each pair of the battery cells 200 in a direction of facing each other.

The frame 100 may preferably include assembling openings G for accommodating the battery cells 200. The assembling openings G are formed as holes opened to upper and lower portions, thereby contributing to form a thin and light battery pack.

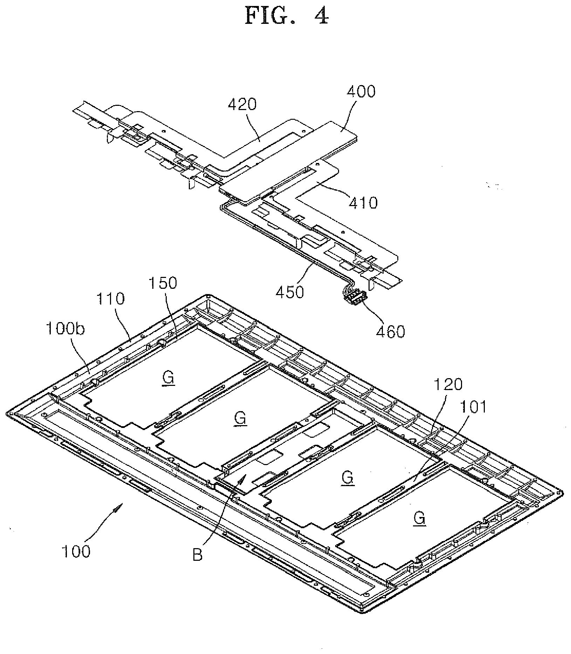

FIG. 4 shows the frame 100 of FIG. 1 from an opposite direction. As shown in FIG. 4, the frame 100 may preferably include a circuit mounting portion B for accommodating the protective circuit module 400. The circuit mounting portion B may preferably be formed as a concave recess having a shape corresponding to that of the protective circuit module 400.

For example, the circuit mounting portion B may preferably be formed at a center of the frame 100, and the assembling openings G may preferably be formed at opposite sides of the circuit mounting portion B. The protective circuit module 400 is electrically connected to the plurality of battery cells 200, and thus, may preferably be disposed at the center to reduce electric connection paths to the battery cells 200.

The assembling openings G and the circuit mounting portion B may preferably be independently formed from each other by barriers 101 extending across the frame 100. Thus, the battery cells 200 and the protective circuit module 400 accommodated in the assembling openings G and the circuit mounting portion B may not mechanically interfere with neighboring elements, and may be electrically insulating from the neighboring elements.

Meanwhile, the frame 100 may preferably include a strength reinforcing portion 120. The strength reinforcing portion 120 may preferably include a plurality of ribs that extend along a direction in parallel with each other, for example, on a plane of the frame 100. The strength reinforcing portion 120 may preferably provide mechanical rigidity that is sufficient enough to resist against warping and bending deformation, while reducing an entire weight of the frame 100. The frame 100 may preferably be formed in an injection molding process by using an insulating resin.

As shown in FIGS. 1 and 4, the frame 100 may preferably include a first surface 100a and a second surface 100b. In addition, the battery cells 200 may preferably be assembled on, for example, the first surface 100a of the frame 100, and the protective circuit module 400 may preferably be assembled on, for example, the second surface 100b of the frame 100. However, the present invention is not limited thereto, that is, the battery cells 200 and the protective circuit module 400 may preferably be assembled on the first surface 100a or the second surface 100b together.

Referring to FIG. 1, the frame 100 may preferably include a frame main body 110 including the assembling openings G, and support portions 150 protruding from the frame main body 110 toward the assembling openings G to support edges of the battery cells 200.

For example, the support portions 150 may preferably support the third and fourth side portions 230 and 240 of each battery cell 200 so that the battery cell 200 may preferably fall down through the assembling opening G. The assembling openings G may preferably be formed as holes, and the support portion 150 may preferably protrude from the frame main body so as not to fall down the battery cell 200 through the assembling openings G of hole types.

For example, the support portions 150 may preferably be configured to surround a side portion 210, 220, 230, or 240 of the battery cell 200. The battery cell 200 includes the first side portion 210 through which the electrode taps 211 and 212 are withdrawn, the second side portion 220 formed opposite to the first side portion 210, and the third and fourth side portions 230 and 240 extending in parallel with each other between the first and second side portions 210 and 220. Here, the support portion 150 may preferably be formed on a side portion of the assembling opening G, which faces one of the side portions 220, 230, and 240 of the battery cell 200, so as to surround at least one side portion of the second through fourth side portions 220, 230, and 240, except for the first side portion 210 through which the electrode taps 211 and 212 are withdrawn.

According to the embodiment of the present invention, the support portions 150 may preferably extend along a direction that is in parallel with the side portions 230 and 240 of the battery cell 200 so as to surround the side portions 230 and 240 of the battery cell 200. In more detail, the support portions 150 may preferably extend in parallel with the third and fourth side portions 230 and 240 of the battery cell 200 so as to surround the third and fourth side portions 230 and 240 of the battery cell 200.

Also, the support portions 150 may preferably extend along with three side portions of the assembling opening G, which face the second, third, and fourth side portions 220, 230, and 240 of the battery cell 200. That is, as shown in FIG. 1, the support portion 150 may preferably further include an additional support portion 150a extending along the second side portion 220 of the battery cell 200. By supporting the three side portions, that is, second through fourth side portions 220, 230, and 240 of the battery cell 200, the support portion 150 may preferably stably support the battery cell 200.

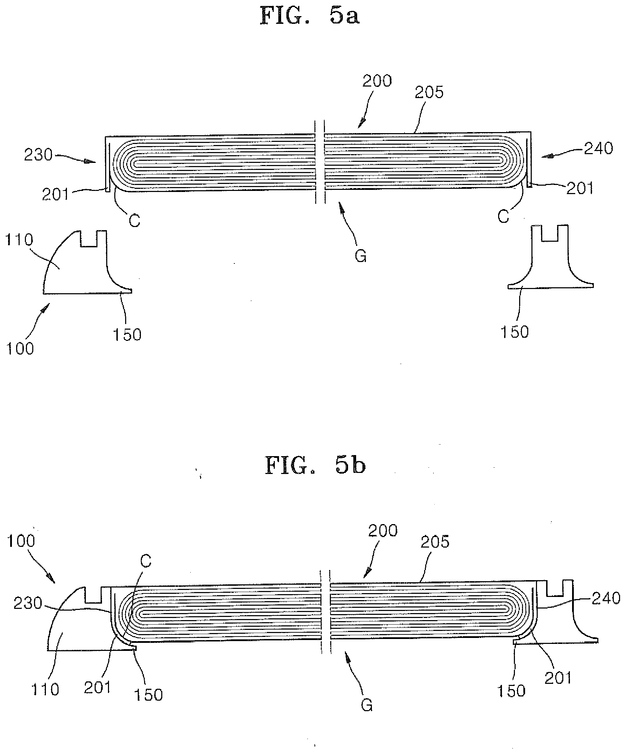

FIGS. 5A and 5B are cross-sectional views of the battery pack taken along a line V-V of FIG. 1, for illustrating assembling processes of the frame 100 and the battery cell 200.

Referring to FIGS. 5A and 5B, the support portion 150 protruding from the frame main body 110 toward the assembling opening G may preferably be formed as a curved surface to surround the side portions 230 and 240 of the battery cell 200. That is, the support portion 150 may preferably provide a curvature type of support surface surrounding the rounded corner C of the side portion 230 or 240 of the battery cell 200. For example, the third and fourth side portions 230 and 240 of the battery cell 200 may preferably include the rounded corner C respectively, and the support portion 150 may preferably include a curved type support surface so as to adhere to the rounded corner C of the battery cell 200.

In an embodiment of the present invention the non-curved surface of the frame forms the top of the assembly opening G so that the frame is able to accommodate a battery cell. In an embodiment of the present invention the curved surface of the supporting protrusions forms the opposing face of the assembly opening G so that the battery cell is held in the opening, i.e. the assembly opening G has two openings of different sizes where the opening adjacent the non-curved surface of the frame is large enough to allow a battery cell to be accommodated and the opening adjacent the support protrusions is small enough to allow the battery cell to be held.

In an embodiment of the present invention, the cross section of the frame and the support protrusion at each side of the assembly opening G, i.e. the sides that correspond with the third and fourth side portions of the cell, when taken across first side portion and height of the battery cell, .e.g. V-V, has a non-curved vertical portion that is adjacent to a quarter-circle portion. In an embodiment of the present invention the above cross section is a radius-ed right angle, i.e. the right angle had been replaced by a curved section.

For example, the support portion 150 may preferably protrude from the frame main body 110 toward the assembling opening G along soft curve. In an embodiment of the present invention, a soft curve is one where the gradient is not steep, i.e. gently bent to form a curve. The battery cell 200 is supported by the supporting portion 150 adhering to the outer surface of the battery cell 200, and thus, movement of the battery cell 200 caused due to a gap between the battery cell 200 and the frame 100 may be prevented, and the battery cell 200 may be stably supported. The supporting portion 150 that is rounded as a curve may contribute to form a thin battery pack.

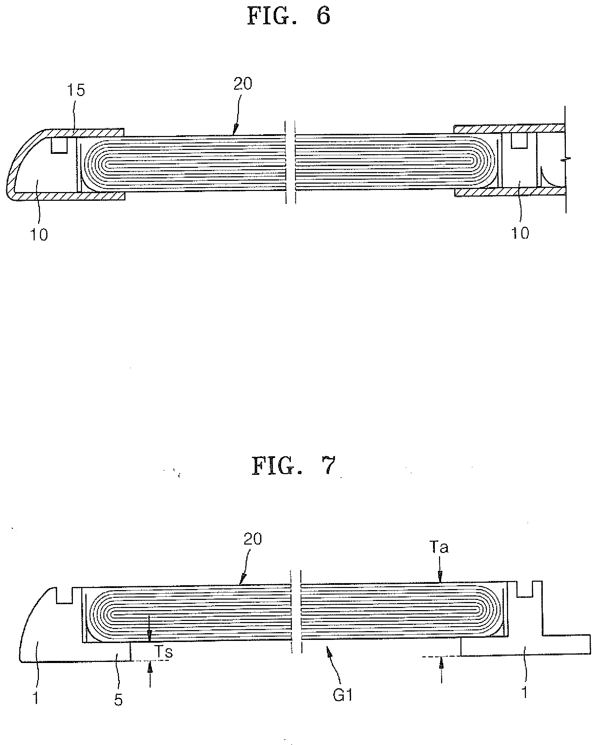

FIG. 6 is a diagram showing a battery pack according to a comparative example. As shown in FIG. 6, according to the comparative example, a tape 15 is attached onto a frame 10 in which a battery cell 20 is inserted and assembled so as to fix the battery cell 20 on the frame 10 and to prevent the battery cell 20 from escaping from the frame 10. However, according to the attaching method using the tape, creases are formed on the outer surface of the battery cell 20 due to the taping, and thus, outer appearance of the battery cell 20 is degraded. Also, according to the characteristics of the taping operation, it is difficult to detach the tape 15 attached to the battery cell 20, thereby degrading operating property. Also, according to the attaching method using the tape 15, the battery cell 20 may be dropped from the frame 10 due to external shock according to an attaching strength of the tape 15.

According to the embodiment shown in FIGS. 5A and 5B, since the supporting portion 150 is integrally formed with the frame 100, an additional member such as a tape is not necessary. In addition, since a taping operation may be omitted, the number of entire processes may be reduced. Also, quality degradation caused due to the taping operation may be solved. For example, the supporting portion 150 may preferably be integrally formed with the frame 100 through an injection molding operation, and an additional process or an additional element for supporting the battery cell 200 is not necessary. As such, the battery cell 200 is supported by the supporting portion 150 that is integrally formed with the frame 100, and thus, the battery cell 200 may be stably supported without regard to the external shock or vibration.

FIG. 7 is a diagram showing a battery pack according to another comparative example. In the battery pack shown in FIG. 7, a supporting portion 5 surrounding a side portion of a battery cell 20 is formed as bent form, not a rounded shape. That is, the supporting portion 5 extends from a frame main body 1 in a bent direction to be branched from the frame main body 1, and thus, the support portion 5 needs to have a thickness Ts greater than an appropriate level. That is, if the supporting portion 5 branched from the frame main body 1 and protruding toward an assembling opening G1 is formed to be thin, the supporting portion 5 may not stably support the battery cell 20 and may be easily broken by an external weight. Thus, the supporting portion 5 needs to have a thickness Ts that is greater than a predetermined level. In this case, since a thickness Ta of the entire battery pack is a sum of a thickness of the battery cell 20 and the thickness Ts of the supporting portion 5, the entire thickness of the battery pack increases.

However, according to the embodiment shown in FIGS. 5A and 5B, the supporting portion 150 is not branched from the frame main body 100, but is formed integrally with the frame main body 100, and thus, there is no need to consider mechanical strength of the supporting portion 150 itself. In addition, the thickness of the supporting portion 150 is not substantially added to the entire thickness of the battery pack, and thus, a thin battery pack may be manufactured. Even when the battery pack is thin, the supporting portion 150 may support the battery cell 200 with a sufficient strength, and may have sufficient durability against external weight.

Referring to FIGS. 5A and 5B, the supporting portion 150 may preferably insulate and protect the side wings 201 of the battery cell 200. As described above, the supporting portion 150 is formed to surround the side portions 230 and 240 of the battery cell 200. Here, the supporting portion 150 surrounds the side wings 201 formed on the side portions 230 and 240 of the battery cell 200 to insulate and protect the side wings 201 from external environment. For example, the side wings 201 may preferably overlap the supporting portion 150, and thus, may be curved along with the rounded shape of the supporting portion 150.

For example, the side wings 201 may be formed by folding fusion bonding portion of the pouch 205 onto the third and fourth side portions 230 and 240 of the battery cell 200 to make an outer appearance of the battery cell 200 compact. Here, the supporting portion 150 may surround the side wings 201 with the third and fourth side portions 230 and 240 of the battery cell 200 so that the side wings 201 may preferably be adhered onto the third and fourth side portions 230 and 240 of the battery cell 200. For example, if the side wings 201 are not sufficiently supported and right locations of the side wings 201 are not defined, movement or fluttering of the side wings 201 may cause interference with peripheral components.

Cross-sectional shape of the pouch 205 may be exposed through edges of the side wings 201, for example, the cross-section in which metal sheet (not shown) with insulating sheets stacked on opposite sides of the metal sheet (not shown), may be exposed. Here, if the edges of the side wings 201 are conductively connected to the peripheral components, electric shorts occur, and thereby affecting charging and discharging operations of the entire battery pack negatively.

According to the present embodiment, the supporting portions 150 surrounding the side wings 201 with the side portions 230 and 240 of the battery cell 200 to insulate and protect the side wings 201 from peripheral components, and a tape member that is conventionally used to attach the side wings 201 to the side portions 230 and 240 of the battery cell 200 may not be used.

Referring back to FIG. 1, the plurality of battery cells 200 may preferably be electrically connected to each other in series, in parallel, or in serial-parallel with each other by lead plates 410 and 420. The plurality of battery cells 200 may preferably be electrically modulated via the lead plates 410 and 420.

For example, the first electrode tap 211 and the second electrode tap 212 may preferably be formed on the first side portion 210 of each battery cell 200. Here, the lead plates 410 and 420 extend in a direction along the first side portions 210 of the battery cells 200 so as to be electrically connected to the first and second electrode taps 211 and 212 of neighboring battery cells 200. For example, the lead plates 410 and 420 may preferably include one or more conductive plates (not shown) forming a current path, and insulating tapes (not shown) coated on outer surfaces of the conductive plates.

Ends of the lead plates 410 and 420 may preferably be connected to the protective circuit module 400. For example, the protective circuit module 400 measures status variables of the battery cell 200 such as a temperature, a voltage, and a current to monitor operations of the battery cell 200, and may preferably control the charging and discharging operations of the battery cell 200 according to the monitoring result.

The lead plates 410 and 420 may preferably include the first lead plate 410 for electrically connecting the protective circuit module 400 and a group of battery cells 200 disposed at a side of the protective circuit module 400, and the second lead plate 420 for electrically connecting the protective circuit module 400 and another group of battery cells 200 disposed at the other side of the protective circuit module 400.

For example, discharging currents of the battery cells 200 may preferably be input to the protective circuit module 400 via the first and second lead plates 410 and 420, and may preferably be connected to a set device (not shown) via the protective circuit module 400. To do this, a connection member 450 for electrically connecting to the set device may preferably be connected to the protective circuit module 400. For example, the connection member 450 may preferably include a plurality of wires. The battery pack may preferably be built in a set device to form a power supply device, and may preferably be electrically connected to the set device via the connection member 450 including a plurality of wires for transferring signals and supplying an electric power.

In another embodiment of the present invention, the connection member 450 may preferably include a printed circuit board on which a plurality of wires are patterned, and in particular, may preferably include a flexible printed circuit board (FPCB). In addition, a connector 460 for electrically connecting to the set device may preferably be disposed at an end of the connection member 450.

The battery pack shown in FIG. 1 may preferably include an insulating plate 300 disposed to cover a first surface 100a of the frame 100. The insulating plate 300 may preferably cover the first surface 100a of the frame 100 so that the battery cell 200 does not escape from the frame 100. For example, the battery cell is mounted on the supporting portions 150 of the frame 100, and the insulating plate 300 covers the battery cell 200 so as to prevent the battery cell 200 from escaping from the frame 100.

For example, the battery cell 200 may preferably be firmly fixed on the frame 100 by the insulating plate 300 disposed on the first surface 100a of the frame 100 and the supporting portions 150 formed at a second surface 100b side of the frame 100, and may not escape from the frame 100. To do this, the insulating plate 300 may preferably be disposed at the first surface 100a of the frame 100, which is opposite to the second surface 100b on which the supporting portions 150 are formed. The insulating plate 300 may preferably cover the first surface 100a of the frame 100, and may preferably cover at least the first surface 100a of the frame 100, which corresponds to the battery cells 200.

For example, the insulating plate 300 may preferably be assembled on the frame 100 or may preferably be fixedly attached onto the frame 100. The insulating plate 300 may preferably be formed of an insulating material such as polyethylene terephthalate (PET), and may preferably be formed to have a plate shape.

It should be understood that the embodiments described therein should be considered in a descriptive sense only and not for purposes of limitation. Descriptions of features or aspects within each embodiment should typically be considered as available for other similar features or aspects in other embodiments.

**<Explanation of Reference numerals designating the Major Elements of the Drawings >**

| | |
|---|---|
| 100 : frame | 100a : first surface of frame |
| 100b : second surface of frame | 101 : barrier wall |
| 110 : frame main body | 150 : supporting portion |
| 150a : additional supporting portion | 200 : battery cell |
| 201 : side wing | 210 : first side portion |
| 211 : first electrode tap | 212 : second electrode tap |
| 220 : second side portion | 230 : third side portion |
| 240 : fourth side portion | 300 : insulating plate |
| 400 : protective circuit module | 410 : first lead plate |
| 420 : second lead plate | 450 : connection member |
| 460 : connector | |
| C : corner of battery cell | B : circuit mounting portion |
| P: bending point | |

## Claims

1. A battery pack comprising: at least one battery cell (200); and a frame (100) including a frame main body (110) having assembling openings for accommodating at least one battery cell, and supporting portions (150) protruding from the frame main body toward the assembling openings to support edges of the at least one battery cell, wherein supporting surfaces of the supporting portions each comprise a curved surface and **characterised in that** each at least one battery cell includes an electrode assembly and a pouch for sealing the electrode assembly, wherein the pouch includes side wings (201) that overlap the supporting portions and the side wings are comparably curved with the curved surfaces of the supporting portions, and wherein the whole of the side wings are in contact with the curved surfaces of the supporting portions.

2. The battery pack of claim 1, wherein the frame comprises a non-curved surface adjacent to the supporting protrusion, optionally wherein the non-curved surface is at the top of the assembly opening and the supporting protrusion is at the bottom of the assembly opening.

3. The battery pack of claim 1 or clam 2, where the supporting portions are formed to surround corners (C) of the opposite side portions of the at least one battery cell.

4. The battery pack of any of claims 1 to 3, where the supporting portions protrude from the frame main body toward the assembling openings along shallowly curved surfaces.

5. The battery pack of any of claims 1 to 4, where each at least one battery cell has a hexahedron shape including: a first side portion (210) through which an electrode tap (211, 212) is withdrawn; a second side portion (220) formed opposite to the first side portion; a third side portion (230) and a fourth side portion (240) extending in parallel with each other between the first and second side portions.

6. The battery pack of claim 5, where the supporting portions extends in parallel with each other along opposite side portions of the assembling opening, which face the third and fourth side portions.

7. The battery pack of claim 5 or 6, where the supporting portions extends along three side portions of the assembling opening, which face the second, third, and fourth side portions.

8. The battery pack of any of claims 5 to 7, where the supporting portion surrounds a corner of at least one of the second through fourth side portions of the at least one battery cell.

9. The battery pack of any of claims 1 to 8, where each at least one battery cell includes a first side portion (210) through which an electrode tap (211, 212) is withdrawn, a second side portion (220) formed opposite to the first side portion, and a third side portion (230) and a fourth side portion (240) extending in parallel with each other between the first and second side portions, wherein the side wings (201) extend along the third and fourth side portions.

10. The battery pack of any of claims 1 to 9, further comprising a circuit mounting portion (B) on which a protective circuit module (400) that controls charging and discharging operations of the battery cells is mounted.

11. The battery pack of claim 10, wherein the circuit mounting portion is formed at a centre portion of the frame, optionally where the assembly opening is formed at opposite side of the circuit mounting portion.

12. The battery pack of any of claims 1 to 11, wherein each at least one battery cell includes a first side portion (210) through which an electrode tap (211, 212) is withdrawn, and the battery pack optionally further include lead plates (410, 420) extending along first side (210) portions of the battery cells to electrically connect neighboring battery cells to each other, optionally the lead plates include a first lead plate (410) for electrically connecting the protective circuit module (400), when present, and the battery cells disposed at a side of the protective circuit module; and a second lead plate (420) for electrically connecting the protective circuit module, when present, and the battery cells disposed at the other side of the protective circuit module.

13. The battery pack of any of claims 1 to 12, further including an insulating plate (300) disposed to cover a surface of the frame.

## Patentansprüche

1. Batteriepack, umfassend: zumindest eine Batteriezelle (200); und einen Rahmen (100), umfassend einen Rahmenhauptkörper (110), welcher Montageöffnungen zum Aufnehmen zumindest einer Batteriezelle aufweist, und Stützabschnitte (150), welche vom Rahmenhauptkörper zu den Montageöffnungen vorstehen, um Ränder der zumindest einen Batteriezelle zu tragen, wobei die Stützflächen der Stützabschnitte jeweils eine gekrümmte Fläche aufweisen und **dadurch gekennzeichnet, dass** jede zumindest eine Batteriezelle eine Elektrodenanordnung und einen Beutel zum Abdichten der Elektrodenanordnung umfasst, wobei der Beutel Seitenflügel (201) umfasst, welche die Stützabschnitte überlappen und die Seitenflügel eine Krümmung aufweisen, welche mit der der gekrümmten Flächen der Stützabschnitte vergleichbar ist, und
wobei die gesamten Seitenflügel die gekrümmten Flächen der Stützabschnitte berühren.

2. Batteriepack nach Anspruch 1, wobei der Rahmen eine nicht gekrümmte Fläche umfasst, welche an dem Stützvorsprung angrenzt, optional wobei die nicht gekrümmte Fläche sich an der Oberseite der Montageöffnung und der Stützvorsprung sich an der Unterseite der Montageöffnung befindet.

3. Batteriepack nach Anspruch 1 oder Anspruch 2, wobei die Stützabschnitte ausgebildet sind, um Ecken (C) der gegenüberliegenden Seitenabschnitte der zumindest einen Batteriezelle zu umschließen.

4. Batteriepack nach einem der Ansprüche 1 bis 3, wobei die Stützabschnitte vom Rahmenhauptkörper zu den Montageöffnungen entlang flach gekrümmter Flächen vorstehen.

5. Batteriepack nach einem der Ansprüche 1 bis 4, wobei jede zumindest eine Batteriezelle jeweils hexaederförmig ist, umfassend: einen ersten Seitenabschnitt (210), durch welchen eine Elektrodenanschluss (211, 212) entfernt wird; einen zweiten Seitenabschnitt (220), welcher gegenüber dem ersten Seitenabschnitt gebildet ist; einen dritten Seitenabschnitt (230) und einen vierten Seitenabschnitt (240), welche sich parallel zueinander zwischen dem ersten und dem zweiten Seitenabschnitt erstrecken.

6. Batteriepack nach Anspruch 5, wobei die Stützabschnitte sich parallel zueinander entlang gegenüberliegenden Seitenabschnitten der Montageöffnung erstrecken, welche dem dritten und vierten Seitenabschnitt zugewandt sind.

7. Batteriepack nach Anspruch 5 oder 6, wobei die Stützabschnitte sich entlang drei Seitenabschnitten der Montageöffnung erstrecken, welche dem zweiten, dritten und vierten Seitenabschnitt zugewandt sind.

8. Batteriepack nach einem der Ansprüche 5 bis 7, wobei der Stützabschnitt eine Ecke zumindest einer der zweiten bis vierten Seitenabschnitten der zumindest einen Batteriezelle umschließt.

9. Batteriepack nach einem der Ansprüche 1 bis 8, wobei jede zumindest eine Batteriezelle einen ersten Seitenabschnitt (210), durch welchen ein Elektrodenanschluss (211, 212) entfernt wird, einen zweiten Seitenabschnitt (220), welcher gegenüber dem ersten Seitenabschnitt gebildet ist, und einen dritten Seitenabschnitt (230) und einen vierten Seitenabschnitt (240) umfasst, welche sich parallel zueinander zwischen dem ersten und zweiten Seitenabschnitt erstrecken, wobei die Seitenflügel (201) sich entlang dem dritten und vierten Seitenabschnitt erstrecken.

10. Batteriepack nach einem der Ansprüche 1 bis 9, ferner umfassend einen Schaltungshalteabschnitt (B), auf welchem ein Schutzschaltungsmodul (400) gehalten ist, welches das Laden und Entladen der Batteriezellen steuert.

11. Batteriepack nach Anspruch 10, wobei der Schaltungshalteabschnitt aus einem Mittelabschnitt des Rahmens gebildet ist, optional wobei die Montageöffnung auf der gegenüberliegende Seite des Schaltungshalteabschnitts gebildet ist.

12. Batteriepack nach einem der Ansprüche 1 bis 11, wobei jede zumindest eine Batteriezelle einen ersten Seitenabschnitt (210) umfasst, durch welchen ein Elektrodenanschluss (211, 212) entfernt wird, und wobei der Batteriepack optional ferner Zuleitungsplatten (410, 420) umfasst, welche sich entlang erster Seitenabschnitte (210) der Batteriezellen erstrecken, um benachbarte Batteriezellen elektrisch miteinander zu verbinden, optional wobei die Zuleitungsplatten eine erste Zuleitungsplatte (410) zur elektrischen Verbindung des Schutzschaltungsmoduls (400), falls vorhanden, mit den Batteriezellen, welche auf einer Seite des Schutzschaltungsmoduls angeordnet sind; und eine zweite Zuleitungsplatte (420) umfassen, zur elektrischen Verbindung des Schutzschaltungsmoduls, falls vorhanden, mit den Batteriezellen, welche auf der anderen Seite des Schutzschaltungsmoduls angeordnet sind.

13. Batteriepack nach einem der Ansprüche 1 bis 12, ferner umfassend eine Isolierplatte (300), welche angeordnet ist, um eine Oberfläche des Rahmens abzudecken.

## Revendications

1. Bloc-batterie, comprenant : au moins un élément de batterie (200) ; et un cadre (100) incluant un corps principal de cadre (110) comportant des ouvertures d'assemblage pour recevoir au moins un élément de batterie, et des parties de support (150) débordant du corps principal du cadre vers les ouvertures d'assemblage pour supporter des bords du au moins un élément de batterie, dans lequel les surfaces de support des parties de support comprennent chacune une surface incurvée, et **caractérisé en ce que** chaque au moins un élément de batterie inclut un assemblage d'électrode et une poche pour assurer l'étanchéité de l'assemblage d'électrode, dans lequel la poche inclut des ailes latérales (201) chevauchant les parties de support, les ailes latérales présentant une courbure comparable à celle des surfaces courbées des parties de support, et dans lequel l'ensemble des ailes latérales est en contact avec les surfaces courbées des parties de support.

2. Bloc-batterie selon la revendication 1, dans lequel le cadre comprend une surface non courbée adjacente à la saillie de support, dans lequel la surface non courbée se situe optionnellement au niveau de la partie supérieure de l'ouverture d'assemblage, la saillie de support étant située au niveau de la partie inférieure de l'ouverture d'assemblage.

3. Bloc-batterie selon les revendications 1 ou 2, dans lequel les parties de support sont formées de sorte à entourer des coins (C) des parties latérales opposées du au moins un élément de batterie.

4. Bloc-batterie selon l'une quelconque des revendications 1 à 3, dans lequel les parties de support débordent du corps principal du cadre vers les ouvertures d'assemblage le long de surfaces à faible courbure.

5. Bloc-batterie selon l'une quelconque des revendications 1 à 4, dans lequel au moins un élément de batterie a une forme en hexaèdre, incluant : une première partie latérale (210) à travers laquelle est retirée une prise d'électrode (211, 212) ; une deuxième partie latérale (220) formée en un point opposé à la première partie latérale ; une troisième partie latérale (230) et une quatrième partie latérale (240) s'étendant de manière parallèle l'une à l'autre entre les première et deuxième parties latérales

6. Bloc-batterie selon la revendication 5, dans lequel les parties de support s'étendent de manière parallèle l'une à l'autre le long de parties latérales opposées de l'ouverture d'assemblage, faisant face aux troisième et quatrième parties latérales.

7. Bloc-batterie selon les revendications 5 ou 6, dans lequel les parties de support s'étendent le long de trois parties latérales de l'ouverture d'assemblage, faisant face aux deuxième, troisième et quatrième parties latérales.

8. Bloc-batterie selon l'une quelconque des revendications 5 à 7, dans lequel la partie de support entoure un coin d'au moins une des deuxième à quatrième parties latérales du au moins un élément de batterie.

9. Bloc-batterie selon l'une quelconque des revendications 1 à 8, dans lequel chaque au moins un élément de batterie inclut une première partie latérale (210) à travers laquelle est retirée une prise d'électrode (211, 212), une deuxième partie latérale (220) formée en un point opposé à la première partie latérale, et une troisième partie latérale (230) ainsi qu'une quatrième partie latérale (240) s'étendant de manière parallèle l'une à l'autre entre les première et deuxième parties latérales, dans lequel les ailes latérales (201) s'étendent le long des troisième et quatrième parties latérales.

10. Bloc-batterie selon l'une quelconque des revendications 1 à 9, comprenant en outre une partie de montage de circuit (B) sur laquelle est monté un module de circuit de protection (400) contrôlant les opérations de chargement et de déchargement de l'élément de batterie.

11. Bloc-batterie selon la revendication 10, dans lequel la partie de montage du circuit a la forme d'une partie centrale du cadre, dans lequel l'ouverture d'assemblage est optionnellement formée au niveau du côté opposé de la partie de montage du circuit.

12. Bloc-batterie selon l'une quelconque des revendications 1 à 11, dans lequel chaque au moins un élément de batterie inclut une première partie latérale (210) à travers laquelle est retirée une prise d'électrode (211, 212), le bloc-batterie incluant en outre optionnellement des plaques conductrices (410, 420) s'étendant le long des premières parties latérales (210) des éléments de batterie pour connecter électriquement des éléments de batterie avoisinants, les plaques conductrices incluant optionnellement une première plaque conductrice (410) pour connecter électriquement le module de circuit de protection (400), lorsque celui-ci est présent, et les éléments de batterie disposées au niveau d'un côté du module de circuit de protection ; et une deuxième plaque conductrice (420) pour connecter électriquement le module de circuit de protection, si celui-ci est présent, et les éléments de batterie disposés au niveau de l'autre côté du module de circuit de protection.

13. Bloc-batterie selon l'une quelconque des revendications 1 à 12, incluant en outre une plaque isolante (300) disposée de sorte à recouvrir une surface du cadre.
